# FASCICULE DE BREVET EUROPEEN

(11) **EP 1 115 966 B1**
(45) Date de publication et mention de la délivrance du brevet: **14.07.2004**
(21) Numéro de dépôt: 99936704.8
(22) Date de dépôt: 06.08.1999
(51) Int. Cl.: F02F 1/42, F02F 3/26, F02B 23/10

(54) **MOTEUR A COMBUSTION INTERNE A ALLUMAGE COMMANDE**
FREMDGEZÜNDETE BRENNKRAFTMASCHINE
SPARK IGNITION INTERNAL COMBUSTION ENGINE

(30) Priorité: 23.09.1998 FR 9811881
(43) Date de publication de la demande: 18.07.2001
(73) Titulaire: Renault s.a.s., 92100 Boulogne Billancourt (FR)
(72) Inventeur: HAUET, Bertrand, F-78640 Saint Germain de la Grange (FR)
(86) Numéro de dépôt international: PCT/FR1999/001950
(87) Numéro de publication internationale: WO 2000/017505

(56) Documents cités:
- EP-A- 0 412 008
- EP-A- 0 778 402
- US-A- 4 162 661
- PATENT ABSTRACTS OF JAPAN vol. 016, no. 119 (M-1225), 25 mars 1992 (1992-03-25) & JP 03 286124 A (MAZDA MOTOR CORP), 17 décembre 1991 (1991-12-17) cité dans la demande

## Description

La présente invention concerne un moteur à combustion interne à allumage commandé et injection directe de carburant destiné notamment à équiper un véhicule automobile ou routier. La présente invention concerne plus particulièrement la forme de la chambre de combustion d'un tel moteur et notamment la face supérieure du piston.

Il est connu par le document JP3-286124 relatif à un moteur de type multicylindre à allumage commandé et injection directe, de disposer les injecteurs de carburant sensiblement dans l'axe des cylindres, chaque injecteur débouchant au sommet d'un évidement conique ménagé dans la culasse.

Cette position centrale de l'injecteur de carburant présente l'avantage de limiter les phénomènes de mouillage de paroi, c'est-à-dire le dépôt de particules de carburant sur les parois du cylindre, et donc de limiter les émissions importantes de substances polluantes telles que des HC.

Conformément au document précité, il est également connu de faire déboucher une bougie d'allumage directement dans l'évidement conique aménagé au débouché de l'injecteur.

Les formes des pistons connus, plats ou en toit ou encore présentant une cavité, associés à ce type de chambre de combustion présentent l'inconvénient de ne pas satisfaire de façon optimale les deux principaux modes de fonctionnement rencontrés par les moteurs injection directe essence, à savoir les fonctionnements stratifiés et les fonctionnements homogènes.

En effet, jusqu'ici, lorsque la géométrie des pistons est adaptée à la préparation de la charge stratifiée et à la concentration locale de la combustion alors c'est le fonctionnement en charge homogène qui est dégradé et vis et versa, lorsque la géométrie des pistons est adaptée au fonctionnement en charge homogène alors c'est le fonctionnement en mode stratifié qui se trouve pénalisé

La présente invention a donc pour objet de réaliser un moteur à combustion interne à allumage commandé et injection directe de carburant de conception nouvelle qui remédie aux inconvénients précités et ce, notamment grâce à un piston de forme adaptée permettant tout à la fois des fonctionnements stratifiés et homogènes.

Le moteur à combustion interne selon l'invention est du type comprenant :
- une chambre de combustion délimitée par la paroi supérieure d'un piston monté dans un alésage cylindrique d'un bloc-cylindres et la paroi inférieure d'une culasse ;
- deux conduits d'admission formés à travers la culasse et débouchant dans la chambre de combustion d'un côté de la surface en toit par deux orifices distincts d'admission obturés par des soupapes ;
- deux conduits d'échappement formés à travers la culasse et débouchant dans la chambre de combustion du côté opposé aux orifices d'admission par deux orifices distincts d'échappement obturés par des soupapes ;
- un évidement ménagé dans la culasse et débouchant dans la paroi inférieure de la culasse ;
- un injecteur de carburant disposé parallèlement à l'axe du cylindre et débouchant au sommet de l'évidement ;
- une bougie d'allumage débouchant latéralement dans l'évidement.

Selon l'invention, le moteur à combustion interne est caractérisé en ce que :
le piston est pourvu sur sa paroi supérieure d'une cavité s'étendant sensiblement sous ledit évidement, cette cavité étant entourée par deux bossages en saillie qui s'étendent symétriquement par rapport au plan transversal du cylindre.

Selon une autre caractéristique du moteur à combustion interne objet de l'invention, l'évidement est formé par une cavité principale délimitée par un fond où débouche le nez de l'injecteur et une paroi latérale, et une pluralité de cavités secondaires débouchant dans la partie inférieure de la cavité principale.

Selon une autre caractéristique du moteur à combustion interne objet de l'invention, ladite cavité principale s'étend sensiblement dans l'axe du cylindre.

Selon une autre caractéristique du moteur à combustion interne objet de l'invention, la cavité principale est de section sensiblement circulaire ou elliptique.

Selon une autre caractéristique du moteur à combustion interne objet de l'invention, les cavités secondaires s'étendent de part et d'autre de la cavité principale entre les orifices d'admission et/ou d'échappement.

Selon une autre caractéristique du moteur à combustion interne objet de l'invention, les bossages ménagés sur la face supérieure du piston autour de part et d'autre de la cavité s'étendent selon un secteur angulaire compris entre 90° et 130°.

Selon une autre caractéristique du moteur à combustion interne objet de l'invention, les bossages ménagés sur la face supérieure du piston de part et d'autre de la cavité présentent des extrémités s'étendant sous les orifices d'admission et d'échappement qui sont conformées pour générer des zones de chasse conséquente orientées vers le centre de la cavité.

Selon une autre caractéristique du moteur à combustion interne objet de l'invention, la face supérieure du piston présente des surfaces en forme de plan incliné qui s'étendent de part et d'autre de la cavité entre les bossages, ces surfaces étant adaptées pour canaliser la chasse générée par les extrémités des bossages vers le centre de la cavité.

Selon une autre caractéristique du moteur à combustion interne objet de l'invention, les électrodes de la bougie d'allumage s'étendent au voisinage de l'axe du cylindre.

Selon une autre caractéristique du moteur à combustion interne objet de l'invention, la bougie d'allumage est disposée au-dessus des conduits d'admission ou des conduits d'échappement, avec une inclinaison adaptée par rapport à l'axe du cylindre.

On comprendra mieux les buts, aspects et avantages de la présente invention, d'après la description donnée ci-après d'un mode de réalisation de l'invention, présenté à titre d'exemple non limitatif, en se référant aux dessins annexés, dans lesquels :
la figure 1 est une vue de dessus schématique, présentant la chambre de combustion d'un moteur à combustion interne selon l'invention ;
la figure 2 est une vue en coupe selon la ligne II-II de la figure 1 ;
la figure 3 est une vue de dessus du piston représenté à la figure 2.

L'exemple de réalisation de l'invention décrit conformément aux figures, concerne un moteur à combustion interne à quatre temps, de type multicylindre, à allumage commandé, à injection directe de carburant et à quatre soupapes par cylindre.

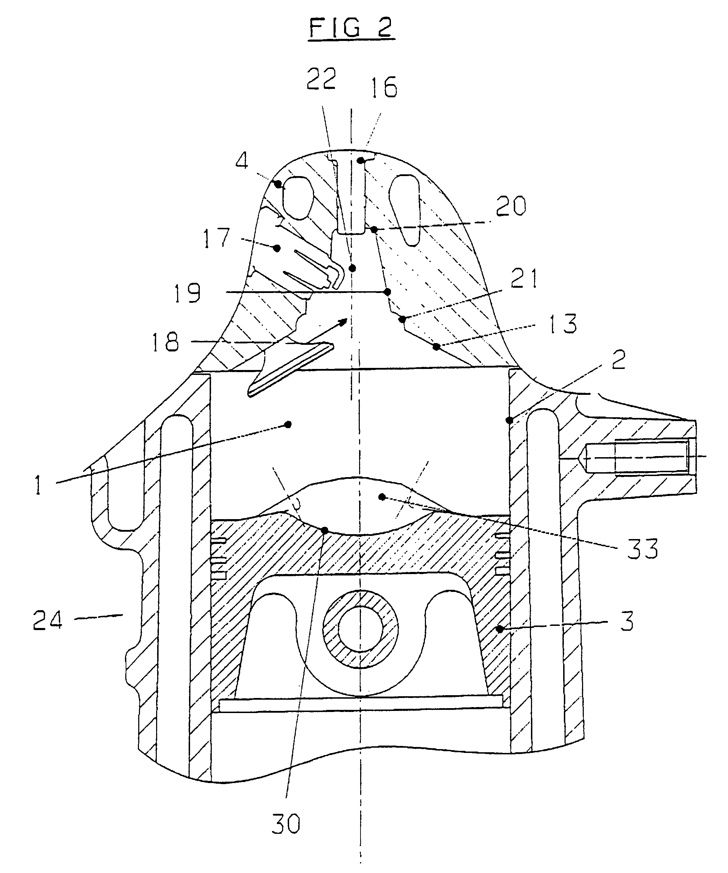

Le corps principal de ce moteur à combustion interne est formé par une culasse 4 surmontant un carter-cylindres 24. Une pluralité d'alésages cylindriques ou cylindres, identiques au cylindre 2 représenté à la figure 2, sont agencés dans le carter-cylindres 24. Chaque cylindre 2 loge un piston 3 dont le mouvement alternatif est destiné à être converti en un mouvement rotatif par un système bielle-vilebrequin non figuré.

Dans la partie supérieure du cylindre 2 s'étend une chambre de combustion 1 qui est délimitée par la face supérieure du piston 3, la face inférieure 13 en regard de la culasse 4 et les parois du cylindre 2. La paroi inférieure 13 de la culasse est principalement en forme de toit à deux pentes dont l'arête sommitale 14 s'étend sensiblement parallèlement à l'axe longitudinal de la culasse 4.

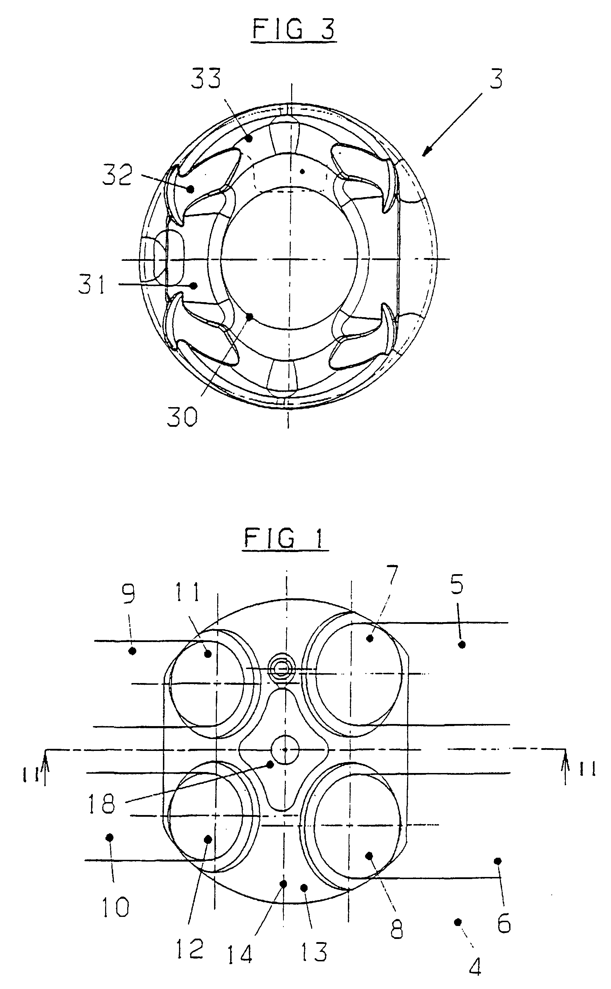

En se reportant à la figure 1, on voit que la culasse 4 est traversée transversalement pour chaque chambre de combustion 1, par deux conduits d'admission des gaz comburant 5,6 et par deux conduits d'échappement des gaz brûlés 9,10. Ces conduits d'admission et d'échappement s'étendent respectivement de part et d'autre de la chambre de combustion par rapport au plan médian longitudinal de la culasse, et ils débouchent dans ladite chambre de combustion par des orifices d'admission 7,8 et d'échappement 11,12 qui sont munis de soupapes à tige permettant d'en contrôler l'ouverture.

Les deux orifices d'admission 7,8 sont agencés à travers la paroi inférieure 13 de la culasse 4 d'un même côté par rapport à l'arête sommitale 14, tandis que les orifices d'échappement 11 et 12 sont agencés à travers la paroi inférieure 13 de la culasse 4 du côté opposé aux orifices d'admission. L'angle formé entre les soupapes d'admission et d'échappement correspond sensiblement à l'angle du toit 13.

Par ailleurs, le calibrage des orifices d'admission est adapté pour occuper au maximum la face admission du toit 13 en limite d'effets de parois, les deux conduits d'admission 5 et 6 qui s'étendent sensiblement parallèlement l'un à l'autre à travers la culasse 4 étant de plus conformés pour favoriser le remplissage de la chambre de combustion 1 en air comburant.

Selon la présente invention, la paroi inférieure 13 de la culasse 4 comporte par ailleurs un évidement 18 s'étendant sensiblement parallèlement à l'axe du cylindre 2. Dans cet évidement 18 débouchent un injecteur de carburant 16 et une bougie d'allumage 17. L'injecteur 16 est connecté classiquement à un circuit d'alimentation en carburant sous pression non figurée. La quantité de carburant injectée est déterminée par un système électronique de contrôle moteur, également non figuré, qui détermine le phasage et la durée d'ouverture de l'injecteur 16 suivant les conditions de fonctionnement du moteur et notamment la charge et le régime. Ce même système électronique de contrôle moteur commande par ailleurs le phasage et la durée d'allumage de la bougie 17.

L'évidement 18 est formé par une cavité principale 22 s'étendant de préférence sensiblement dans l'axe du cylindre 2. Pour des besoins d'implantation l'axe de l'évidement 18 peut toutefois s'écarter de l'axe du cylindre 2 de quelques millimètres. Cette cavité est délimitée dans sa partie supérieure par une paroi de fond 20 où débouche le nez de l'injecteur 16 et une paroi latérale 19 de forme sensiblement ogivale tronquée où débouche la bougie d'allumage 17. L'ouverture inférieure de cette cavité est prolongée en direction des quatre pontets inter-soupapes par des cavités secondaires 21.

Ces cavités secondaires 21 ont pour principale fonction d'augmenter le volume de l'évidement 18, sans augmenter la profondeur de la cavité principale 22. Ainsi, il est possible de disposer d'un volume de confinement de dimension appropriée sans affecter la compacité de la culasse et sans réduire la surface de chasse.

Bien évidement, le nombre de ces cavités secondaires n'est pas limitatif, il est ainsi possible de n'avoir que trois cavités secondaires : une s'étendant en direction du pontet admission et les deux autres s'étendant de part et d'autre de la cavité principale 22, parallèlement à l'arête 14. De même, la forme et les dimensions de ces cavités sont adaptées en fonction de la place disponible et du volume de confinement souhaité.

Par ailleurs, les formes des différentes cavités secondaires 21 entourant la cavité principale 22 sont également liées à la forme de cette dernière. La cavité principale 22 peut être de section circulaire ou bien encore elliptique comme cela est figuré, le grand axe de l'ellipse pouvant être parallèle à l'arête 14 ou bien encore perpendiculaire à celle-ci. De même, l'évasement donné à la paroi latérale 19 peut être réduit au minimum permis par les techniques de moulage/d'usinage, de façon à atteindre une forme sensiblement cylindrique.

L'injecteur de carburant est monté à travers la culasse 4 parallèlement à l'axe du cylindre de façon à ce que son nez d'injection débouche sensiblement au droit de la paroi de fond 20 de l'évidement 18. Suivant des variantes de réalisation de l'invention, le nez de l'injecteur peut déboucher en saillie ou bien légèrement en retrait de la paroi de fond 20.

Les dimensions de l'évidement 18 et celles du cône d'éjection du carburant sont adaptées les unes aux autres pour éviter tout mouillage de la paroi latérale 19 directement par le jet de carburant, quelles que soient les conditions de fonctionnement du moteur.

La bougie 17 qui débouche latéralement à travers la paroi 19, s'étend dans la culasse 4 de préférence dans le plan axial de la culasse, soit au-dessus des conduits d'admission 5,6 comme cela est figuré soit encore au-dessus des conduits d'échappement 9,10. La bougie est inclinée par rapport à l'axe du cylindre d'un angle α, cet angle est de préférence supérieur à 45°. Le positionnement de la bougie 17 est par ailleurs adapté pour que le point d'allumage constitué par l'entrefer de ses électrodes, se trouve à une distance h adaptée du nez de l'injecteur 16 et soit atteint par le jet de carburant lorsque le moteur fonctionne en mélange stratifié.

La profondeur H de l'évidement 18 est choisie de façon que la distance h précitée soit sensiblement inférieure au deux tiers de H (h<(2/3)*H). En particulier, la bougie 17 s'étend au-dessus des cavités secondaires 21. Cette implantation de la bougie 17 dans la partie supérieure de l'évidement 18 à proximité immédiate du nez de l'injecteur 16, permet de mieux contrôler l'initiation de la combustion.

En effet, à l'intérieur du volume de confinement que constitue l'évidement 18, les mouvements aérodynamiques demeurent limités en particulier dans la partie supérieure de l'évidement 18. Il est donc possible de contrôler précisément la stratification du mélange carburé autour de la bougie. De plus, pour les fonctionnements à fortes charges, il est possible d'obtenir une première phase de combustion limitée à l'évidement 18, de déroulement très rapide proche d'une transformation isochore puis, lorsque le front de flamme quitte l'évidement 18 pour atteindre le cylindre, une seconde phase de type transformation isobare. Un tel déroulement permet d'améliorer le rendement thermodynamique de la combustion pour une même température maximum de cycle.

Il est à noter que les cavités secondaires réparties à la périphérie de la cavité principale 22 présentent l'avantage supplémentaire de canaliser les gaz balayés par effet de chasse. Ces gaz sont ainsi dirigés à la sortie de la cavité principale 22 et permettent donc de favoriser la propagation rapide du front de flamme à l'ensemble de la chambre de combustion 1.

Conformément à l'invention, le piston 3 et plus particulièrement sa face supérieure sont optimisés par rapport au reste de la chambre de combustion et plus particulièrement à l'évidement 18 pour permettre le fonctionnement du moteur aussi bien en mode homogène qu'en mode stratifié.

Pour ce faire, la face supérieure du piston 3 présente un évidement concave 30 en forme d'empreinte sphérique. Cette cavité 30, venant de fonderie et/ou obtenue après usinage, s'étend sensiblement au centre du piston sous l'évidement 18. L'ouverture circulaire de cette cavité 30 présente un diamètre inférieur à la moitié du diamètre du piston et de préférence égal à celui de l'ouverture inférieure en regard de l'évidement 18.

La cavité 30 est entourée par deux bossages en saillie 33. Les deux bossages 33 sont agencés de part et d'autre de la cavité 30 selon l'axe longitudinal de la culasse 4 et s'étendent symétriquement par rapport au plan vertical transversal du cylindre.

Ces bossages sont disposés à la périphérie de la cavité 30 selon un secteur angulaire compris de préférence entre 90° et 130°. Leur forme est complémentaire de celle de la face inférieure 13 de la culasse 4, ce qui permet notamment de limiter le volume résiduel de la chambre de combustion 1 lorsque le piston 3 se trouve au Point Mort Haut, ceci afin d'obtenir un taux de compression des gaz adéquat.

Les parois latérales des bossages 33 en regard de la cavité 30 sont conformées pour prolonger l'empreinte sphérique ; quant aux extrémités 32 des bossages 33 s'étendant sous les orifices d'admission 7,8 et d'échappement 11,12, elles sont conformées pour générer des zones de chasse conséquente orientées vers le centre de la cavité 30.

La face supérieure du piston 3 présente par ailleurs des surfaces 31 en forme de plan incliné s'étendant de part et d'autre de la cavité 30 entre les bossages 33. La pente de ces surfaces 31 sensiblement inférieure à celle des extrémités 32 est adaptée pour canaliser la chasse générée par ces extrémités 32 vers la cavité 30. Par ailleurs ces surfaces 31 dont les bords supérieurs délimitent l'ouverture de la cavité 30, contribuent à augmenter le volume de cette dernière sans augmenter les dimensions du piston 3 et en particulier l'épaisseur de sa tête.

La face supérieure du piston 3 permet ainsi d'obtenir lorsque ce dernier est au Point Mort Haut, un volume résiduel pour la chambre de combustion 1 formé de l'évidement 18 et de la cavité 30 qui tend vers un volume de forme sphérique avec un point d'allumage relativement centré.

La forme retenue pour le piston 3 associée à l'évidement 18 ménagé dans la culasse 4 est particulièrement adaptée pour permettre des modes de fonctionnement stratifiés et homogènes performants, tant en termes de rendement que d'émission de polluant. Cet arrangement influe donc favorablement tant sur l'aérodynamique interne que sur la formation et la propagation de la combustion.

Pour ce qui est de l'aérodynamique interne, l'organisation du mouvement des gaz admis dans la chambre de combustion 1 est centrée dans la cavité 30 ce qui assure le maintien de leur énergie lors de la phase de compression près du Point Mort Haut combustion, énergie qui se trouve augmentée en fin de compression par les effets de chasse orientés vers le centre de la cavité résiduelle pseudo sphérique que forme alors la chambre de combustion. Cette aérodynamique interne intense permet d'obtenir des vitesses de combustion élevées, donc un rendement thermodynamique optimal.

Pour ce qui est de l'initiation de la combustion et de sa propagation. En charge stratifiée, le carburant injecté tardivement se trouve concentré dans l'évidement 18 et pour partie dans la cavité 30 ce qui limite sa dispersion dans le reste du cylindre. En charge homogène, le mélange carburé occupe un volume résiduel qui tend vers une forme sphérique bénéficiant d'un point d'allumage sensiblement central. La combustion tend donc à se propager de façon uniforme autour de ce point d'allumage en rencontrant tardivement dans le cycle et à peu près au même moment les parois, il s'ensuit des pertes thermiques restreintes et le maintien d'une vitesse de combustion élevée très longtemps dans le cycle.

## Revendications

1. Moteur à combustion interne comprenant :
- une chambre de combustion (1) délimitée par la paroi supérieure d'un piston (3) monté dans un alésage cylindrique (2) d'un bloc-cylindres et la paroi inférieure d'une culasse (4) ;
- deux conduits d'admission (5,6) formés à travers la culasse (4) et débouchant dans la chambre de combustion (1) d'un côté de la surface en toit (13) par deux orifices distincts d'admission (7,8) obturés par des soupapes ;
- deux conduits d'échappement (9,10) formés à travérs la culasse (4) et débouchant dans la chambre de combustion (1) du côté opposé aux orifices d'admission par deux orifices distincts d'échappement (11,12) obturés par des soupapes ;
- un évidement (18) ménagé dans la culasse et débouchant dans la paroi inférieure de la culasse (4) ;
- un injecteur de carburant (16) disposé parallèlement à l'axe du cylindre (2) et débouchant au sommet de l'évidement (18) ;
- une bougie d'allumage (17) débouchant latéralement dans l'évidement (18) ;
**caractérisé en ce que** :
le piston (3) est pourvu sur sa paroi supérieure d'une cavité (30) s'étendant sensiblement sous ledit évidement (18), ladite cavité (30) étant entourée par deux bossages en saillie (33) qui s'étendent symétriquement par rapport au plan transversal du cylindre.

2. Moteur à combustion interne selon la revendication 1, **caractérisé en ce que** ledit évidement (18) est formé par une cavité principale (22) délimitée par un fond (20) où débouche le nez de l'injecteur (16) et une paroi latérale (19), et une pluralité de cavités secondaires (21) débouchant dans la partie inférieure de la cavité principale (22).

3. Moteur à combustion interne selon la revendication 2, **caractérisé en ce que** ladite cavité principale (22) s'étend sensiblement dans l'axe du cylindre (2).

4. Moteur à combustion interne selon l'une quelconque des revendications 2 ou 3, **caractérisé en ce que** ladite cavité principale (22) est de section sensiblement circulaire ou elliptique.

5. Moteur à combustion interne selon l'une quelconque des revendications 2 à 4, **caractérisé en ce que** les cavités secondaires (21) s'étendent de part et d'autre de la cavité principale (22) entre les orifices d'admission (7,8) et/ou d'échappement (11,12).

6. Moteur à combustion interne selon l'une quelconque des revendications 1 à 5, **caractérisé en ce que** lesdits bossages (33) ménagés sur la face supérieure du piston (3) autour de part et d'autre de la cavité (30) s'étendent selon un secteur angulaire compris entre 90° et 130°.

7. Moteur à combustion interne selon l'une quelconque des revendications 1 à 6, **caractérisé en ce que** lesdits bossages (33) ménagés sur la face supérieure du piston (3) de part et d'autre de la cavité (30) présentent des extrémités s'étendant sous les orifices d'admission et d'échappement qui sont conformées pour générer des zones de chasse conséquente orientées vers le centre de la cavité (30).

8. Moteur à combustion interne selon la revendication 7, **caractérisé en ce que** la face supérieure du piston (3) présente des surfaces (31) en forme de plan incliné qui s'étendent de part et d'autre de la cavité (30) entre les bossages (33), lesdites surfaces étant adaptées pour canaliser la chasse générée par les extrémités (32) des bossages (33) vers le centre de la cavité (30).

9. Moteur à combustion interne selon l'une quelconque des revendications 1 à 8, **caractérisé en ce que** les électrodes de la bougie (17) s'étendent au voisinage de l'axe du cylindre (2).

10. Moteur à combustion interne selon l'une quelconque des revendications 1 à 8, **caractérisé en ce que** la bougie (17) est disposée au-dessus des conduits d'admission (5,6) ou des conduits d'échappement (9,10), avec une inclinaison adaptée par rapport à l'axe du cylindre (2).

## Patentansprüche

1. Verbrennungsmotor aufweisend:
- eine Verbrennungskammer (1), welche durch eine obere Wand eines Kolbens (3), der in einer zylindrischen Bohrung (2) eines Motorblocks montiert ist, und der unteren Wand eines Zylinderkopfes (4) begrenzt ist;
- zwei Einlassleitungen (5,6), die durch den Zylinderkopf (4) hindurch gebildet sind, und welche in die Verbrennungskammer (1) von einer Seite der dachförmigen Oberfläche (13) durch zwei unterschiedliche Einlassöffnungen (7, 8), die durch Ventile verschlossen sind, münden;
- zwei Auslassleitungen (9, 10), die durch den Zylinderkopf (4) hindurch gebildet sind und welche in der Verbrennungskammer (1) auf der den Einlassöffnungen gegenüberliegenden Seite durch zwei unterschiedliche Auslassöffnungen (11, 12), die durch Ventile verschlossen sind, münden;
- eine Ausnehmung (18), die in dem Zylinderkopf vorgesehen ist, und welche in die untere Wand des Zylinderkopfes (4) mündet;
- eine Kraftstoffeinspritzdüse (16), die parallel zu der Achse des Zylinders (2) angeordnet ist, und welche an der Spitze der Ausnehmung (18) mündet;
- eine Zündkerze (17), welche seitlich in die Ausnehmung (18) mündet;
**dadurch gekennzeichnet, dass**
der Kolben (3) an seiner oberen Wand mit einer Vertiefung (30) versehen ist, die sich im wesentlichen unter der Ausnehmung (18) erstreckt, wobei die Vertiefung (30) von zwei vorragenden Vorsprüngen (33) umgeben ist, die sich im wesentlichen symmetrisch im Verhältnis zur transversalen Ebene des Zylinders erstrecken.

2. Verbrennungsmotor gemäß Anspruch 1, **dadurch gekennzeichnet, dass** die Ausnehmung (18) durch eine Haupt-Vertiefung (22) gebildet wird, welche durch einen Boden (20) begrenzt ist, an welcher Stelle. das Vorderteil der Einspritzdüse (16) mündet, und eine seitliche Wand (19) begrenzt wird, und eine Mehrzahl von sekundären Vertiefungen (21), die in den unteren Teil der Haupt-Vertiefung (22) münden.

3. Verbrennungsmotor gemäß Anspruch 2, **dadurch gekennzeichnet, dass** die Haupt-Vertiefung (22) sich im wesentlichen in der Achse des Zylinders (2) erstreckt.

4. Verbrennungsmotor gemäß irgendeinem der Ansprüche 2 oder 3, **dadurch gekennzeichnet, dass** die Haupt-Vertiefung (22) von einem im wesentlichen kreisförmigen oder elliptischen Querschnitt ist.

5. Verbrennungsmotor gemäß irgendeinem der Ansprüche 2 bis 4, **dadurch gekennzeichnet, dass** die sekundären Vertiefungen (21) sich im wesentlichen beiderseits der Haupt-Vertiefung (22) zwischen den Einslassöffnungen (7, 8) und/oder den Auslassöffnungen (11, 12) erstrecken.

6. Verbrennungsmotor gemäß irgendeinem der Ansprüche 1 bis 5, **dadurch gekennzeichnet, dass** die Vorsprünge (33); welche auf der oberen Fläche des Kolbens (3) beiderseits um die Vertiefung (30) herum vorgesehen sind, sich im wesentlichen gemäß einem Winkelsektor zwischen 90° und 130° erstrecken.

7. Verbrennungsmotor gemäß irgendeinem der Ansprüche 1 bis 6, **dadurch gekennzeichnet, dass** die Vorsprünge (33), welche an der oberen Fläche des Kolbens (3) beiderseits der Vertiefung (30) vorgesehen sind, Enden aufweisen, die sich unter den Einlassöffnungen und Auslassöffnungen erstrecken, die gebildet sind, um beachtliche Zonen einer Spülung (*frz*.. *chasse*) zu bilden, die in der Richtung zum Zentrum der Vertiefung (30) ausgerichtet sind.

8. Verbrennungsmotor gemäß Anspruch 7, **dadurch gekennzeichnet, dass** die obere Fläche des Kolbens (3) Oberflächen (31) in der Form einer geneigten Ebene aufweisen, die sich beiderseits der Vertiefung (30) zwischen den Vorsprüngen (33) erstrecken, wobei die Oberflächen angepasst sind, um die Spülung (*frz*. *chasse*) zu kanalisieren, welche durch die Enden (32) der Vorsprünge (33) in Richtung zum Zentrum der Vertiefung (30) erzeugt wird.

9. Verbrennungsmotor gemäß irgendeinem der Ansprüche 1 bis 8, **dadurch gekennzeichnet, dass** die Elektroden der Kerze (17) sich in der Nähe der Achse des Zylinders (2) erstrecken.

10. Verbrennungsmotor gemäß irgendeinem der Ansprüche 1 bis 8, **dadurch gekennzeichnet, dass** die Kerze (17) oberhalb der Einlassleitungen (5, 6) oder der Auslassleitungen (9, 10) mit einer Neigung angeordnet ist, welche im Verhältnis zur Achse des Zylinders (2) angepasst ist.

## Claims

1. An internal combustion engine comprising:
- a combustion chamber (1) bounded by the upper wall of a piston (3) mounted in a cylindrical bore (2) of a cylinder block and the lower wall of a cylinder head (4);
- two intake ducts (5, 6) formed through the cylinder head (4) and communicating with the combustion chamber (1) on one side of the roof-shaped surface (13) via two separate intake orifices (7, 8) closed off by valves;
- two exhaust ducts (9, 10) formed through the cylinder head (4) and communicating with the combustion chamber (1) on the side opposite the intake ducts via two separate exhaust orifices (11, 12) closed off by valves;
- a recess (18) provided in the cylinder head and communicating with the lower wall of the cylinder head (4);
- a fuel injector (16) disposed parallel to the axis of the cylinder (2) and communicating with the apex of the recess (18);
- a spark plug (17) communicating laterally with the recess (18),
**characterised in that** the piston (3) is provided on its upper surface with a cavity (30) extending substantially below this recess (18), this cavity (30) being surrounded by two projecting bosses (33) which extend symmetrically with respect to the transverse plane of the cylinder.

2. An internal combustion engine as claimed in claim 1, **characterised in that** the recess (18) is formed by a main cavity (22) bounded by a base (20) with which the nozzle of the injector (16) communicates and a lateral wall (19), and a plurality of secondary cavities (21) communicating with the lower portion of the main cavity (22).

3. An internal combustion engine as claimed in claim 2, **characterised in that** the main cavity (22) extends substantially in the axis of the cylinder (2).

4. An internal combustion engine as claimed in any one of claims 2 or 3, **characterised in that** the main cavity (22) is of substantially circular or elliptical section.

5. An internal combustion engine as claimed any one of claims 2 to 4, **characterised in that** the secondary cavities (21) extend on either side of the main cavity (22) between the intake orifices (7, 8) and/or exhaust orifices (11, 12).

6. An internal combustion engine as claimed in any one of claims 1 to 5, **characterised in that** the bosses (33) provided on the upper surface of the piston (3) about both sides of the cavity (30) extend along an angular sector of between 90° and 130°.

7. An internal combustion engine as claimed in any one of claims 1 to 6, **characterised in that** the bosses (33) provided on the upper surface of the piston (3) about both sides of the cavity (30) have ends extending below the intake and exhaust orifices which are shaped to generate consequent blast zones oriented towards the centre of the cavity (30).

8. An internal combustion engine as claimed in claim 7, **characterised in that** the upper surface of the piston (3) has surfaces (31) in the form of inclined planes which extend on both sides of the cavity (30) between the bosses (33), these surfaces being adapted to channel the blast generated by the ends (32) of the bosses (33) towards the centre of the cavity (30).

9. An internal combustion engine as claimed in any one of claims 1 to 8, **characterised in that** the electrodes of the spark plug (17) extend in the vicinity of the axis of the cylinder (2).

10. An internal combustion engine as claimed in any one of claims 1 to 8, **characterised in that** the spark plug (17) is disposed above the intake ducts (5, 6) or exhaust ducts (9, 10), with an appropriate inclination with respect to the axis of the cylinder (2).
